# FASCICULE DE BREVET EUROPEEN

(11) **EP 3 838 743 B1**
(45) Date de publication et mention de la délivrance du brevet: **26.10.2022**
(21) Numéro de dépôt: 20212489.7
(22) Date de dépôt: 08.12.2020
(51) Int. Cl.: B64C 1/40, F16L 3/18, H02G 3/00, H02G 3/38, H02G 3/30

(54) **ENSEMBLE DE CONDUITS POUR AÉRONEF À MONTAGE EN GLISSIÈRE**
GESAMTHEIT VON LEITUNGEN FÜR LUFTFAHRZEUG ZUR MONTAGE AUF GLEITSCHIENEN
SET OF DUCTS FOR AN AIRCRAFT WITH RAIL MOUNTING

(30) Priorité: 18.12.2019 FR 1914713
(43) Date de publication de la demande: 23.06.2021
(73) Titulaire: AIRBUS OPERATIONS (S.A.S.), 31060 Toulouse (FR)
(72) Inventeur: SALGUES, Patrick, 31060 TOULOUSE Cedex 9 (FR); AURIAC, Vincent, 31060 TOULOUSE Cedex 9 (FR); FEUILLERAC, Laurent, 31060 TOULOUSE Cedex 9 (FR)
(74) Mandataire: Gicquel, Olivier Yves Gérard

(56) Documents cités:
- EP-A1- 0 620 395
- EP-A1- 3 438 001
- DE-A1-102009 029 754
- US-A1- 2005 242 245

## Description

La présente invention concerne le domaine des architectures électriques, hydrauliques et aérauliques des aéronefs. Elle porte sur l'architecture de tout type d'aéronefs, notamment des aéronefs commerciaux pour le transport de passagers et des aéronefs de type cargo.

Les aéronefs comportent, selon une configuration classique, un fuselage allongé, par exemple sensiblement cylindrique ou bilobé, fondé sur une structure comportant un ensemble de cadres annulaires liés entre eux par des éléments structurels droits, longitudinaux, appelés longerons et raidisseurs.

A l'intérieur du fuselage, au moins un plancher est ménagé. Le plancher est sensiblement horizontal lorsque l'aéronef est au sol. Le plancher est généralement destiné au déplacement des passagers et/ou à l'installation du mobilier intérieur dans un aéronef de transport de passager, ou à accueillir une part de la cargaison dans un avion-cargo. L'espace au-dessus du plancher dans lequel sont installés les passagers ou les marchandises est appelé « cabine », tandis que l'espace sous le plancher comporte la soute de l'aéronef ainsi que divers systèmes (trains d'atterrissage dans leur case de train d'atterrissage respective, zone centrale de l'aile, etc.).

C'est également sous le plancher le plus bas de l'aéronef que sont ménagés la plupart des conduits électriques, hydrauliques et aérauliques de l'aéronef, et en particulier les conduits principaux qui courent longitudinalement de l'avant à l'arrière du fuselage pour distribuer l'électricité ou le fluide considéré aux consommateurs répartis dans l'aéronef. Les conduits longitudinaux sont ainsi disposés généralement dans une zone située juste sous le plancher, sur un côté (ou le cas échéant sur chaque côté) de l'aéronef. Dans la mesure où le plancher est situé au niveau du plan horizontal diamétral du fuselage, ou sous ce plan, la zone de passage des conduits présente une section sensiblement triangulaire. Plus précisément, cette zone a une section sensiblement en triangle rectangle dont l'hypoténuse est courbée (du fait de la forme cylindrique du fuselage). La zone d'implantation des conduits est ainsi parfois appelée « zone triangle ».

Si cette zone est très bien adaptée à l'implantation des conduits longitudinaux du fait de sa configuration, de sa position et du fait qu'elle est difficilement exploitable pour d'autres fonctions, cette zone est néanmoins difficile d'accès et confinée. Cela complexifie la pose des conduits, d'autant qu'ils ne peuvent être posés que sous la forme de portions successives aboutées. L'aboutement et la connexion des conduits sont parfois complexes à réaliser, du fait de la compensation nécessaire des écarts dus aux tolérances dans la forme et le positionnement des conduits. En outre, les raccords entre les différentes portions de conduit aboutées nécessitent parfois des opérations de serrage qui sont complexes à réaliser du fait du peu d'espace disponible pour les réaliser.

La mise en place des conduits électriques, hydrauliques et aérauliques est donc une opération complexe, longue, et fastidieuse pour les opérateurs.

La complexité de pose et la mauvaise ergonomie de travail dans la zone d'implantation des conduits rendent difficiles le montage ce qui est consommateur de temps et générateur de coûts.

Le document DE102009029754A1 décrit un système d'installation de conduits dans un aéronef.

Le document US2005/242245 décrit un support d'éléments allongés transversaux fixé sur une barre longitudinale qui ne répond pas au problème de conduits se trouvant dans une direction longitudinale.

L'invention vise à remédier à tout ou partie des problèmes précités.

L'invention est définie par les revendications.

D'autres particularités et avantages de l'invention apparaîtront encore dans la description ci-après.

Aux dessins annexés, donnés à titre d'exemples non limitatifs :
- la figure 1 représente, selon une vue schématique en trois dimensions, un exemple classique d'aéronef commercial,
- la figure 2 représente, selon une vue schématique en trois dimensions, une portion d'un fuselage d'aéronef,
- la figure 3 représente, selon une vue schématique en trois dimensions, un ensemble de conduits installés dans une portion de fuselage d'aéronef conformément à l'état de la technique ;
- la figure 4 représente, selon une vue schématique partielle en trois dimensions, un ensemble de conduits conforme à un mode de réalisation de l'invention ;
- la figure 5 représente, selon une vue schématique en trois dimensions, un ensemble de conduits installés dans une portion de fuselage d'aéronef conformément à un mode de réalisation de l'invention.

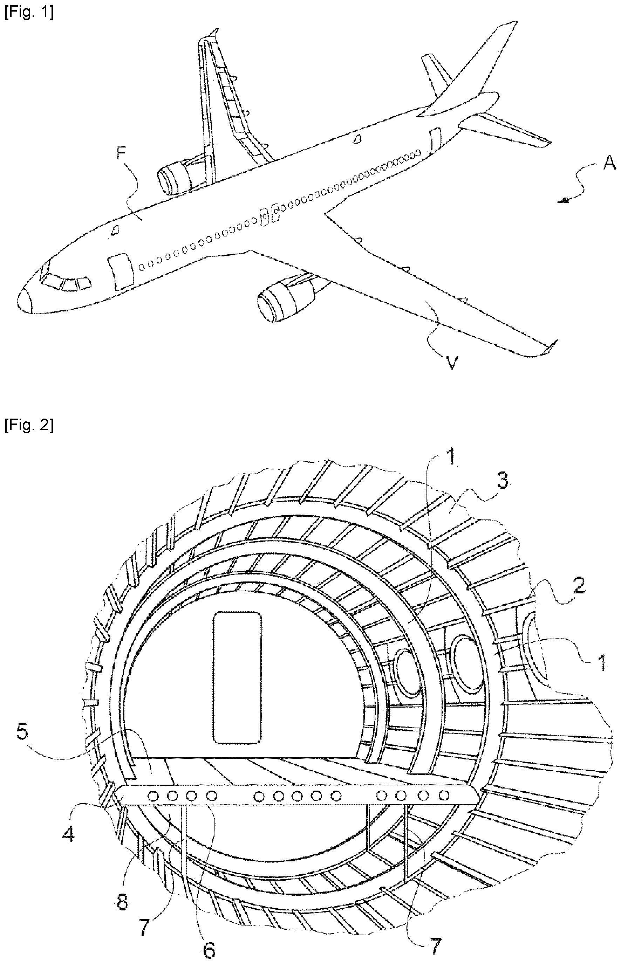

La figure 1 représente un aéronef A de type commercial, par exemple un aéronef pour le transport de passagers. Un tel aéronef comporte typiquement et de manière connue, un fuselage F ayant une forme générale cylindrique, auquel est lié une voilure V assurant la sustentation de l'aéronef.

La figure 2 représente, de manière très schématique, une portion de fuselage d'un aéronef, et illustre en particulier la structure qu'elle comporte classiquement. La figure 2 propose ainsi une vue intérieure d'une portion de fuselage d'aéronef. La structure de fuselage comporte ainsi des cadres 1 annulaires, de forme générale sensiblement circulaire. Les cadres 1 sont liés entre eux, selon une direction dite longitudinale d'extension du fuselage, par des longerons 2 et raidisseurs longitudinaux. Les cadres 1 et longerons 2 sont fixés sur une peau 3 formant la surface extérieure du fuselage.

Un plancher 4 est installé dans la portion de fuselage. Le plancher 4 est sensiblement plat et horizontal lorsque l'aéronef comportant la portion de fuselage est au sol. Il comporte une face supérieure 5, permettant par exemple le déplacement des passagers, l'installation d'équipement mobiliers, etc. Le volume situé au-dessus du plancher constitue la cabine (et le poste de pilotage ou cockpit) de l'aéronef. Le plancher comporte une face inférieure 6, reliée à la structure de fuselage par des étais verticaux 7 (c'est-à-dire orthogonaux au plancher 4, dit horizontal).

Le volume situé dans le fuselage, sous le plancher, est employé pour accueillir un grand nombre de dispositifs de l'aéronef. La partie centrale peut notamment comporter au moins une partie de la soute destinée à recevoir des bagages ou autres cargaisons, ou, en d'autres zones longitudinales de l'aéronef, elle peut comporter les cases de train d'atterrissage.

Sur chaque côté du fuselage, sous le plancher, deux volumes latéraux sont ainsi formés entre la surface inférieure 6 du plancher, les cadres 1 et les raidisseurs ou longerons (et la peau 3), et le plan vertical dans lequel sont disposés les étais 7 les plus éloignés du centre du fuselage. Cette zone est appelée zone triangle 8 du fait de sa conformation générale. La zone triangle 8 offre donc un volume de section transversale sensiblement triangulaire, s'étendant longitudinalement dans le fuselage, et qui s'avère ainsi bien adaptée à recevoir des conduits longitudinaux, et en particulier les conduits principaux qui courent longitudinalement de l'avant à l'arrière du fuselage pour distribuer l'électricité ou des fluides (y compris le vide afin de permettre une aspiration) à des systèmes de l'aéronef désignés de manière générale par le terme « consommateurs » et qui sont répartis dans l'aéronef.

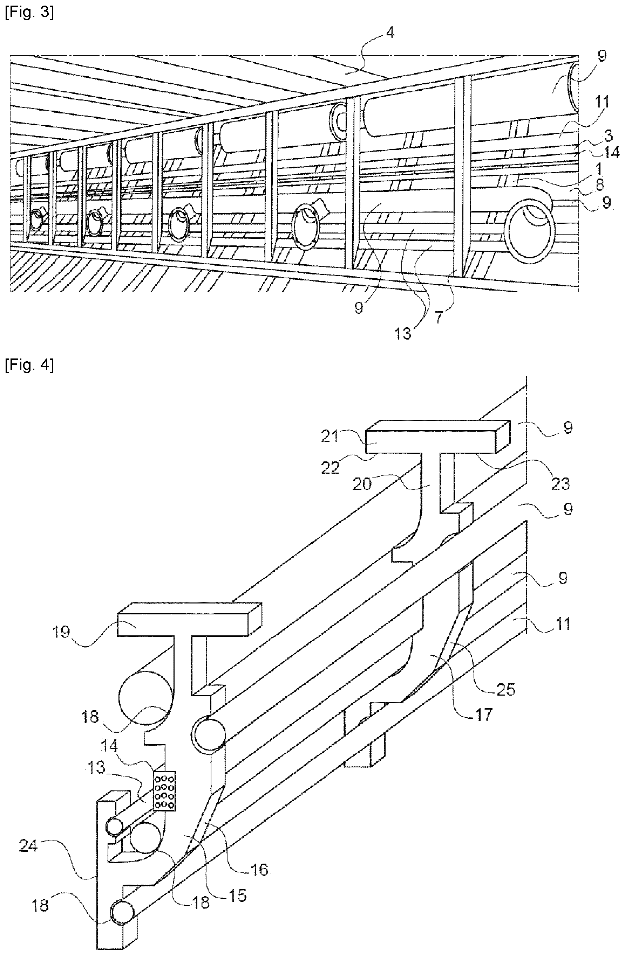

Un exemple d'installation de tels conduits, conforme à l'état de la technique connu, est représenté à la figure 3. La figure 3 représente plus particulièrement la zone triangle 8 d'une portion d'un fuselage d'aéronef. Dans un aéronef moderne, de nombreux conduits doivent être installés dans la zone triangle 8. Dans l'exemple ici représenté, sont installés dans la zone triangle :
Plusieurs conduits de distribution d'air 9, de grandes dimensions, sont destinés à la distribution d'air dans la cabine et, le cas échéant, dans le cockpit (correspondant par exemple à la ventilation, à la climatisation, ...).

Un ou plusieurs conduits hydrauliques 14 (représentés ici sous la forme d'un ensemble de conduits parallèles) peuvent être également présents (pour l'actionnement de systèmes hydrauliques).

Un conduit d'aspiration (pour les toilettes) 11 peut aussi être présent. Au moins un conduit d'eau 13 (pour l'acheminement d'eau, par exemple pour les toilettes) peut aussi être prévu.

Dans cette zone, des conduits électriques (câbles, en faisceau ou non, généralement sous gaine) peuvent également être disposés.

Du fait de la complexité d'accès à la zone triangle 8, qui apparait clairement à la figure 3, et notamment car cette zone est située dans une zone de l'aéronef intrinsèquement difficile d'accès, et du fait des étais verticaux 7, les différents conduits sont complexes à installer dans la portion de fuselage.

Notamment s'agissant pour la plupart de conduits rigides, il est nécessaire de mettre en place chaque conduit rigide par portions, et de raccorder les portions pour former le conduit considéré. Les tolérances dimensionnelles des différentes portions de conduit peuvent rendre complexe leur aboutement. En outre, le confinement de la zone triangle rend complexe le serrage des raccords. Chaque raccord est une source possible de non-conformité, et nécessite un contrôle après montage. Tout cela rend l'installation des conduits dans la zone triangle 8 complexe, coûteuse, et consommatrice de temps. La figure 4 représente un ensemble conforme à un mode de réalisation de l'invention. Un tel ensemble comporte au moins deux conduits 9,11,13,14 s'étendant selon une direction rectiligne. Les conduits 9,11,13,14 de l'ensemble sont fixés à un support de conduits 15. Le support de conduits 15 peut être formé d'un élément rigide s'étendant dans la direction rectiligne d'extension des conduits, ou, de manière préférentielle, être formé d'une pluralité d'éléments de support de conduits 16, 17 comme dans l'exemple ici représenté.

Les conduits de l'ensemble de conduits peuvent notamment être ceux (ou certains de ceux) dont la fonction a été détaillée en référence à la figure 3.

Le support de conduits 15 peut présenter diverses configurations, et notamment diverses sections transversales, afin d'être adapté aux conduits à supporter. Dans l'exemple ici représenté, le support de conduits 15 et donc chaque élément de support de conduits 16, 17, présente plusieurs surfaces de réception 18 de conduits circulaires, chaque surface de réception 18 formant un arc de cercle de diamètre correspondant à celui du conduit qu'elle est destinée à recevoir.

Le support de conduits 15 comporte également un premier élément de glissière 19. Un premier élément de glissière correspond à une pièce destinée à former une glissière en coopération avec un deuxième élément de glissière adapté. Le premier élément de glissière peut ainsi de manière générale être un chariot par exemple à patin(s) ou à roulette(s) adapté à coopérer avec un rail (qui formerait le deuxième élément de glissière), ou inversement, c'est-à-dire que le premier élément de glissière 19 est un rail adapté à coopérer avec un chariot formant le deuxième élément de glissière. Dans l'exemple représenté à la figure 4, le premier élément de glissière 19 est formé d'un ensemble d'éléments rigides orthogonaux à la direction d'extension des conduits 9,11,13,14 de l'ensemble. Le premier élément de glissière 19 est positionné dans une partie dite haute du support de conduits 15 ; en conséquence, l'ensemble de conduits est adapté à être suspendu par ledit premier élément de support 19. Chaque élément rigide formant le premier élément de glissière forme donc, dans l'exemple représenté, une pièce de suspension. La pièce de suspension comporte, une section transversale sensiblement en T, comportant une partie droite dite verticale 20 et une partie droite dite horizontale 21. La partie droite horizontale est adaptée à être introduite dans un rail, et sa face inférieure forme deux patins 22, 23 formant les surfaces de contact du chariot dans le rail.

Chaque élément de support de conduits 16, 17, comporte en outre une première surface latérale d'appui 24 et une deuxième surface latérale d'appui 25 dont les rôles sont détaillés ci-après.

L'un des intérêts majeurs d'un ensemble de conduits conforme à l'invention et exemplifié à la figure 4 est de pouvoir être constitué indépendamment de son environnement final d'installation, c'est-à-dire avant son installation dans un fuselage (ou plus généralement une portion de fuselage d'aéronef). L'ensemble de conduits peut en particulier être formé dans un atelier indépendant de l'atelier de montage final de l'aéronef équipé dudit ensemble de conduits. L'ensemble de conduits peut être constitué sur un gabarit adapté, donnant aux opérateurs de montage la possibilité d'intervenir sans contrainte d'accès. En outre, une fois l'ensemble de conduits constitué, il est possible de le tester avant installation dans le fuselage, ce qui permet si besoin une mise en conformité rapide et aisée, et surtout ce qui évite le montage d'un ensemble non conforme qui devrait faire l'objet de réparations dans l'environnement très contraint du fuselage.

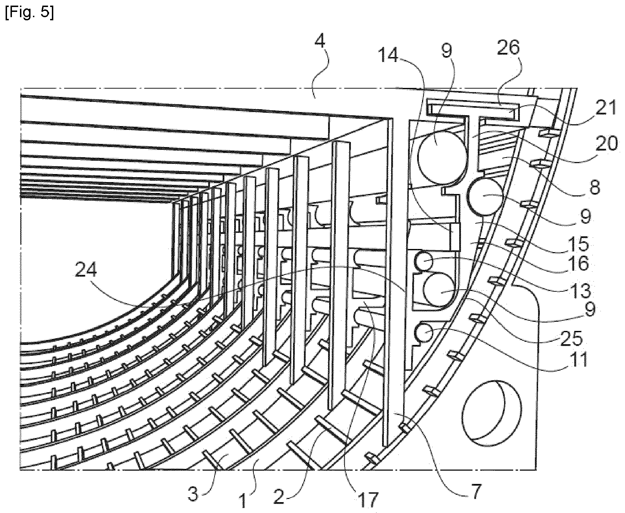

La figure 5 représente l'ensemble de conduits de la figure 4 installé dans une portion de fuselage d'aéronef conformément à un mode de réalisation de l'invention.

La portion de fuselage représentée à la figure 5 est de constitution générale classique, et comporte, tout comme la portion de fuselage représentée à la figure 2, des cadres 1 annulaires liés entre eux, selon une direction longitudinale d'extension du fuselage, par des longerons 2 et raidisseurs longitudinaux. Une peau 3 recouvre ces éléments.

Un plancher 4 est installé dans la portion de fuselage. La face inférieure 6 du plancher est reliée à la structure de fuselage par des étais verticaux 7. Une zone triangle 8 est ainsi définie.

Dans la partie haute de la zone triangle 8, directement sous le plancher 4 ou dans la structure même du plancher 4, est formé un deuxième élément de glissière 26 adapté à coopérer avec le premier élément de glissière 19 du support de conduits 15.

En l'occurrence, dans l'exemple représenté, le deuxième élément de glissière est un rail, sous la forme d'une section creuse parallélépipédique, correspondant avec le jeu à la section de la partie droite horizontale 21 des éléments de suspension du support de conduit 15. Afin de permettre le passage de la partie droite verticale 20 des éléments de suspension du support de conduit 15, une ouverture longitudinale est formée en partie basse de la section creuse formant rail.

Le premier élément de glissière 19, à savoir l'élément de suspension du support de conduits 15 ou de chacun des éléments de support de conduits 16, 17 est inséré, par translation longitudinale (la direction rectiligne d'extension des conduits étant mise en correspondance avec la direction longitudinale), dans le deuxième élément de glissière 26 formant un rail de la glissière ainsi constituée. Une fois en position, comme représenté à la figure 5, l'ensemble de conduits est suspendu dans l'espace triangle 8. Afin de parfaitement immobiliser l'ensemble de conduits dans l'espace triangle 8, et pour répartir les efforts de maintien, la première surface latérale d'appui 24 de chacun des éléments support de conduits est en appui sur un étai vertical 7. De même, la deuxième surface latérale d'appui 25 est, le cas échéant, en appui sur un cadre 1. Les éléments de supports 16, 17, ou certains éléments de support, peuvent être immobilités en translation longitudinale au niveau des étais verticaux 7, ou des cadres 1.

Bien évidemment, de nombreux autres premiers éléments de glissière et deuxième éléments de glissière peuvent être employés dans des modes de réalisation alternatifs de l'invention. Tout en conservant la même géométrie de support, la glissière continue peut être remplacée par exemple par un ensemble de supports formant, du fait de leur alignement, un rail discontinu en tant que deuxième élément de glissière. La configuration rail / chariot formant glissière peut être inversée. Bien qu'une translation sur des surfaces formant patin est privilégiée (une fois l'ensemble de conduits en place, la glissière ne sera plus jamais utilisée pour translater cet ensemble, de sorte qu'il n'est pas nécessaire d'employer une glissière prévue pour un usage courant), d'autres technologies de glissière (à galets, roulettes, etc.) peuvent être employées.

Afin d'aboutir à la configuration dans laquelle l'ensemble de conduits est mis en position définitive, représentée à la figure 5, la portion de fuselage est assemblée selon un procédé de montage propre à la présente invention. Ainsi, comme détaillé ci-avant, l'ensemble de conduits est formé indépendamment de la portion de fuselage. La portion de fuselage, pour ce qui concerne sa structure, y compris son plancher, est réalisée, de sorte à pouvoir être équipée de l'ensemble de conduit. En particulier, un deuxième élément de glissière est formé dans la structure de fuselage ou rapporté à celle-ci, de sorte à pouvoir coopérer avec le premier élément de glissière du support de l'ensemble de conduits.

L'ensemble de conduits est inséré dans la portion de fuselage par l'une de ses extrémités. Dès le début de cette insertion, le premier élément de glissière est mis en coopération avec le deuxième élément de glissière, de sorte que la glissière est formée progressivement entre ces deux éléments lors de l'insertion de l'ensemble de conduits dans la portion de fuselage.

L'insertion de l'ensemble de conduits est poursuivie jusqu'à ce que l'ensemble soit dans la position longitudinale souhaitée. Bien qu'il soit préférable qu'il y ait un seul ensemble de conduits pour couvrir toute la longueur de la portion de fuselage équipée, il est néanmoins possible selon l'invention d'abouter longitudinalement plusieurs ensembles de conduits dans une même portion de fuselage. Cette dernière configuration nécessite de former un certain nombre de raccord, mais reste avantageuse comparativement à l'état de la technique, car d'une part le nombre de raccords à réaliser peut être diminué, mais surtout l'assemblage des ensembles de conduits étant réalisé en dehors de la portion de fuselage, dans un environnement non contraint, cet assemblage est largement facilité.

En outre, l'invention développée se révèle particulièrement avantageuse lorsqu'elle est appliquée à une famille d'aéronefs présentant, selon les variantes de ladite famille, plusieurs longueurs. En effet, ce type de famille d'aéronefs peut être constitué d'une portion de fuselage de base, pour laquelle l'ensemble de conduits peut être standardisé, et optionnellement d'une portion de fuselage additionnelle. Ainsi, la conception d'un ensemble de conduits pour la portion de fuselage de base, et qui sera employé pour tous les aéronefs de la famille, et la conception d'un ensemble de conduit pour la portion de fuselage additionnelle (ou, le cas échéant, d'un ensemble de conduit pour chacune des portions de fuselage additionnelles envisagées dans la famille), sont suffisantes pour couvrir tous les aéronefs de la famille.

L'invention ainsi développée simplifie grandement les opérations de montage des conduits dans les aéronefs, en particulier des conduits installés dans la zone triangle sous plancher, qu'il s'agisse de conduits aérauliques, hydrauliques, ou électriques. L'ensemble de conduits étant monté hors de la portion de fuselage qu'il est destiné à équiper, il peut être monté sans contraintes pour les opérateurs de montage et il peut être testé avant son installation dans la portion de fuselage. La constitution des conduits en un seul ensemble, ou en un nombre limité d'ensembles de conduits, permet de limiter le nombre de raccords à constituer, ce qui améliore la fiabilité des conduits.

## Revendications

1. Portion de fuselage (F) d'aéronef comportant une structure de fuselage comportant des cadres (1) annulaires perpendiculaires à une direction longitudinale d'extension de ladite portion de fuselage, un plancher (4) plat, et des étais verticaux (7) perpendiculaires au plancher (4) qui s'étendent du plancher (4) à un cadre (1), formant un espace dit zone triangle (8) qui est délimité par une face inférieure (6) du plancher (4), lesdits étais verticaux (7) et lesdits cadres (1),
**caractérisée en ce qu'**elle comporte un élément de glissière dit deuxième élément de glissière (26) qui est lié à ou formé par la structure de fuselage et qui est adapté à former, dans ladite zone triangle, une glissière longitudinale par coopération avec un premier élément de glissière correspondant, et **en ce qu'**elle comporte en outre dans ladite zone triangle un ensemble de conduits pour aéronef comportant au moins deux conduits (9,11,13,14) s'étendant selon une direction générale d'extension rectiligne, chaque conduit (9,11,13,14) pouvant être un conduit électrique, hydraulique ou aéraulique,
et **en ce qu'**elle comporte également un support de conduits (15), chaque conduit (9,11,13,14) étant lié audit support de conduits (15), ledit support de conduits (15) comportant le premier élément de glissière (19) adapté à coopérer avec le deuxième élément de glissière (26) de sorte à former une glissière dans la direction générale d'extension desdits conduits, dans laquelle le premier élément de glissière (19) du support de conduits (15) coopère avec le deuxième élément de glissière (26) pour former une glissière par laquelle ledit ensemble de conduits est lié à ladite structure de fuselage.

2. Portion de fuselage selon la revendication 1, **caractérisé en ce que** le premier élément de glissière (19) comporte un chariot, adapté à coopérer avec un rail du deuxième élément de glissière, ou dans lequel le premier élément de glissière comporte un rail adapté à coopérer avec un chariot du deuxième élément de glissière (26).

3. Portion de fuselage selon la revendication 2, **caractérisé en ce que** l'un du premier élément de glissière (19) et du deuxième élément de glissière (26) comporte une pièce de suspension formant patin (22,23) de chariot destiné à coopérer avec le rail de l'autre du premier élément de glissière (19) et du deuxième élément de glissière (26).

4. Portion de fuselage selon la revendication 3, **caractérisé en ce que** chaque pièce de suspension comporte une section transversale sensiblement en T, comportant une partie droite dite verticale (20) et une partie droite dite horizontale (21), ladite partie droite horizontale (21) étant adaptée à être introduite dans le rail, ledit rail étant de section rectangulaire présentant une ouverture longitudinale traversée par la partie droite verticale (20).

5. Portion de fuselage d'aéronef selon l'une des revendications 1 à 4, dans lequel le support de conduits (15) de l'ensemble de conduits est suspendu à la structure de fuselage par une partie haute dudit support de conduits (15).

6. Portion de fuselage d'aéronef selon l'une des revendications précédentes, dans laquelle l'ensemble de conduits comporte au moins deux conduits parmi :
- un conduit de distribution d'air (9) dans une cabine et/ou un cockpit ;
- un conduit hydraulique (14) pour système à commande hydraulique ;
- un conduit d'eau (13) ;
- un conduit d'aspiration (11).

7. Aéronef (A) comportant au moins une portion de fuselage conforme à l'une des revendications 1 à 6.

8. Procédé de montage d'un ensemble de conduits dans une portion de fuselage d'aéronef, comportant les étapes de :
- fourniture d'une portion de fuselage (F) d'aéronef (A) conforme à l'une des revendications 1 à 6 ;
- mise en coopération du premier élément de glissière (19) avec le deuxième élément de glissière (26) pour former une glissière, et mise en place de l'ensemble de conduits dans ladite portion de fuselage par translation le long de la glissière.

9. Procédé de montage selon la revendication 8, **caractérisé en ce qu'**elle comporte une étape consistant à constituer un ensemble de conduits pour aéronef comportant au moins deux conduits (9,11,13,14) s'étendant selon une direction générale d'extension rectiligne, chaque conduit (9,11,13,14) pouvant être un conduit électrique, hydraulique ou aéraulique, et à constituer un support de conduits (15), et à lier chaque conduit (9,11,13,14) audit support de conduits (15).

## Patentansprüche

1. Rumpfabschnitt (F) eines Luftfahrzeugs, umfassend eine Rumpfstruktur mit ringförmigen Rahmen (1), die senkrecht zu einer Längserstreckungsrichtung des Rumpfabschnitts verlaufen, einen flachen Boden (4) und vertikale Streben (7), die senkrecht zum Boden (4) verlaufen, sich vom Boden (4) zu einem Rahmen (1) erstrecken und einen als Dreieckszone (8) bezeichneten Raum bilden, der durch eine Unterseite (6) des Bodens (4), die vertikalen Streben (7) und die Rahmen (1) begrenzt wird,
**dadurch gekennzeichnet, dass** er ein als zweites Gleitschienenelement (26) bezeichnetes Gleitschienenelement aufweist, das mit der Rumpfstruktur verbunden ist oder durch diese ausgebildet wird und das dazu ausgelegt ist, in der Dreieckszone durch Zusammenwirken mit einem entsprechenden ersten Gleitschienenelement eine Längsgleitschiene auszubilden, und dass er ferner in der Dreieckszone eine Leitungsanordnung für ein Luftfahrzeug aufweist, die mindestens zwei Leitungen (9, 11, 13, 14) aufweist, die sich in einer geradlinigen allgemeinen Erstreckungsrichtung erstrecken, wobei jede Leitung (9, 11, 13, 14) eine elektrische, hydraulische oder lufttechnische Leitung sein kann,
und dass er außerdem einen Leitungsträger (15) aufweist, wobei jede Leitung (9, 11, 13, 14) mit dem Leitungsträger (15) verbunden ist, wobei der Leitungsträger (15) das erste Gleitschienenelement (19) aufweist, das dazu ausgelegt ist, mit dem zweiten Gleitschienenelement (26) zusammenzuwirken, um in der allgemeinen Erstreckungsrichtung der Leitungen eine Schiene auszubilden, wobei das erste Gleitschienenelement (19) des Leitungsträgers (15) mit dem zweiten Gleitschienenelement (26) zusammenwirkt, um eine Schiene auszubilden, über die die Leitungsanordnung mit der Rumpfstruktur verbunden ist.

2. Rumpfabschnitt nach Anspruch 1, **dadurch gekennzeichnet, dass** das erste Gleitschienenelement (19) einen Schlitten aufweist, der dazu ausgelegt ist, mit einer Schiene des zweiten Gleitschienenelements zusammenzuwirken, oder wobei das erste Gleitschienenelement eine Schiene aufweist, die dazu ausgelegt ist, mit einem Schlitten des zweiten Gleitschienenelements (26) zusammenzuwirken.

3. Rumpfabschnitt nach Anspruch 2, **dadurch gekennzeichnet, dass** eines des ersten Gleitschienenelements (19) und des zweiten Gleitschienenelements (26) ein Aufhängungsteil aufweist, das eine Schlittenkufe (22, 23) ausbildet, die dazu bestimmt ist, mit der Schiene des anderen des ersten Gleitschienenelements (19) und des zweiten Gleitschienenelements (26) zusammenzuwirken.

4. Rumpfabschnitt nach Anspruch 3, **dadurch gekennzeichnet, dass** jedes Aufhängungsteil einen im Wesentlichen T-förmigen Querschnitt aufweist, der einen geraden sogenannten vertikalen Teil (20) und einen geraden sogenannten horizontalen Teil (21) aufweist, wobei der gerade horizontale Teil (21) dazu ausgelegt ist, in die Schiene eingeführt zu werden, wobei die Schiene einen rechteckigen Querschnitt mit einer Längsöffnung aufweist, die von dem geraden vertikalen Teil (20) durchdrungen wird.

5. Rumpfabschnitt eines Luftfahrzeugs nach einem der Ansprüche 1 bis 4, wobei der Leitungsträger (15) der Leitungsanordnung mit einem oberen Teil des Leitungsträgers (15) an der Rumpfstruktur aufgehängt ist.

6. Rumpfabschnitt eines Luftfahrzeugs nach einem der vorangehenden Ansprüche, wobei die Leitungsanordnung mindestens zwei der folgenden Leitungen umfasst:
- eine Leitung (9) zur Luftverteilung in einer Kabine und/oder einem Cockpit;
- eine Hydraulikleitung (14) für ein hydraulisch gesteuertes System;
- eine Wasserleitung (13);
- eine Saugleitung (11).

7. Luftfahrzeug (A) mit mindestens einem Rumpfabschnitt nach einem der Ansprüche 1 bis 6.

8. Verfahren zur Montage einer Leitungsanordnung in einem Rumpfabschnitt eines Luftfahrzeugs, das die folgenden Schritte aufweist:
- Bereitstellen eines Rumpfabschnitts (F) eines Luftfahrzeugs (A) nach einem der Ansprüche 1 bis 6;
- In-Zusammenwirkung-Bringen des ersten Gleitschienenelements (19) mit dem zweiten Gleitschienenelement (26), um eine Schiene auszubilden, und Anordnen der Leitungsanordnung im Rumpfabschnitt durch Verschieben entlang der Schiene.

9. Montageverfahren nach Anspruch 8, **dadurch gekennzeichnet, dass** es einen Schritt aufweist, der darin besteht, eine Leitungsanordnung für ein Luftfahrzeug zu bilden, die mindestens zwei Leitungen (9, 11, 13, 14) aufweist, die sich in einer geradlinigen allgemeinen Erstreckungsrichtung erstrecken, wobei jede Leitung (9, 11, 13, 14) eine elektrische, hydraulische oder lufttechnische Leitung sein kann, und einen Leitungsträger (15) zu bilden und jede Leitung (9, 11, 13, 14) mit dem Leitungsträger (15) zu verbinden.

## Claims

1. Aircraft fuselage portion (F) comprising a fuselage structure comprising annular frames (1) perpendicular to a longitudinal direction of extent of said fuselage portion, a flat floor (4), and vertical struts (7) perpendicular to the floor (4) that extend from the floor (4) to a frame (1), forming a space, termed triangle region (8), which is delimited by an underside (6) of the floor (4), said vertical struts (7) and said frames (1), **characterized in that** it comprises a slideway element, termed second slideway element (26), which is connected to or formed by the fuselage structure and which is designed to form, in said triangle region, a longitudinal slideway by cooperation with a first corresponding slideway element, and **in that** it additionally comprises, in said triangle region, an aircraft duct assembly comprising at least two ducts (9, 11, 13, 14) extending along a general direction of rectilinear extent, each duct (9, 11, 13, 14) being able to be an electrical, hydraulic or aeraulic duct,
and **in that** it also comprises a duct support (15), each duct (9, 11, 13, 14) being connected to said duct support (15), said duct support (15) comprising the first slideway element (19) designed to cooperate with the second slideway element (26) so as to form a slideway in the general direction of extent of said ducts, in which the first slideway element (19) of the duct support (15) cooperates with the second slideway element (26) to form a slideway via which said duct assembly is connected to said fuselage structure.

2. Fuselage portion according to Claim 1, **characterized in that** the first slideway element (19) comprises a carriage designed to cooperate with a rail of the second slideway element, or in which the first slideway element comprises a rail designed to cooperate with a carriage of the second slideway element (26).

3. Fuselage portion according to Claim 2, **characterized in that** one of the first slideway element (19) and of the second slideway element (26) comprises a suspension piece, forming a carriage runner (22, 23), intended to cooperate with the rail of the other of the first slideway element (19) and of the second slideway element (26).

4. Fuselage portion according to Claim 3, **characterized in that** each suspension piece comprises a substantially T-shaped transverse cross section comprising a straight part, termed vertical part (20), and a straight part, termed horizontal part (21), said horizontal straight part (21) being designed to be introduced into the rail, said rail being of rectangular cross section having a longitudinal opening traversed by the vertical straight part (20) .

5. Aircraft fuselage portion according to one of Claims 1 to 4, in which the duct support (15) of the duct assembly is suspended from the fuselage structure by an upper part of said duct support (15).

6. Aircraft fuselage portion according to one of the preceding claims, in which the duct assembly comprises at least two ducts selected from:
- an air-distribution duct (9) for distributing air into a cabin and/or a cockpit;
- a hydraulic duct (14) for a hydraulic control system;
- a water duct (13);
- a suction duct (11).

7. Aircraft (A) comprising at least one fuselage portion according to one of Claims 1 to 6.

8. Method for mounting a duct assembly in an aircraft fuselage portion, comprising the steps of:
- providing an aircraft (A) fuselage portion (F) according to one of Claims 1 to 6;
- bringing the first slideway element (19) into cooperation with the second slideway element (26) to form a slideway, and fitting the duct assembly in said fuselage portion by translation along the slideway.

9. Mounting method according to Claim 8, **characterized in that** it comprises a step consisting in constituting an aircraft duct assembly comprising at least two ducts (9, 11, 13, 14) extending in a general direction of rectilinear extent, each duct (9, 11, 13, 14) being able to be an electrical, hydraulic or aeraulic duct, and in constituting a duct support (15), and in connecting each duct (9, 11, 13, 14) to said duct support (15).
